# EUROPÄISCHE PATENTSCHRIFT

(11) **EP 3 279 570 B1**
(45) Veröffentlichungstag und Bekanntmachung des Hinweises auf die Patenterteilung: **25.12.2019**
(21) Anmeldenummer: 17182207.5
(22) Anmeldetag: 19.07.2017
(51) Int. Cl.: F24C 15/32, A47J 27/04, F22B 1/28, F16T 1/00

(54) **VERDAMPFEREINRICHTUNG FÜR WASSER UND DAMPFGARER MIT EINER SOLCHEN VERDAMPFEREINRICHTUNG**
EVAPORATOR DEVICE FOR WATER AND STEAMER WITH SUCH A DEVICE
ÉVAPORATEUR ET CUISEUR À VAPEUR COMPRENANT UN TEL ÉVAPORATEUR

(30) Priorität: 01.08.2016 DE 102016214178
(43) Veröffentlichungstag der Anmeldung: 07.02.2018
(73) Patentinhaber: E.G.O. Elektro-Gerätebau GmbH, 75038 Oberderdingen (DE)
(72) Erfinder: Albert, Tobias, 76703 Kraichtal (DE); Schönemann, Konrad, 75056 Sulzfeld (DE)
(74) Vertreter: Patentanwälte Ruff, Wilhelm, Beier, Dauster & Partner mbB

(56) Entgegenhaltungen:
- DE-A1-102005 059 504
- DE-A1-102007 029 244
- DE-A1-102007 054 457
- US-A- 859 271

## Beschreibung

Die Erfindung betrifft eine Verdampfereinrichtung für Wasser, wie sie insbesondere in einem Dampfgarer eingesetzt werden kann, sowie einen solchen Dampfgarer bzw. ein mit Wasserdampf arbeitendes Gargerät.

Aus der DE 102006029578 A1 ist eine Verdampfereinrichtung bekannt mit einer allgemeinen Beheizung und einem seitlich angeordneten Raum. Dort kann mittels Sensoren der Wasserstand in einem Wasserbereich und somit in der Verdampfereinrichtung praxistauglich und sicher erkannt werden.

Aus der DE 102007029244 A1 ist eine weitere Verdampfereinrichtung mit den folgenden Merkmalen bekannt:
- einen Wasserbehälter mit einer umlaufenden Außenwandung und mit einer umlaufenden Innenwandung,
- an der Außenwandung ist eine Heizeinrichtung vorgesehen,
- die Innenwandung verläuft innerhalb der Außenwandung und mit Abstand dazu,
- zwischen Außenwandung und Innenwandung ist ein Wasserbereich gebildet,
- einen Dampfaustritt geht vom Wasserbereich nach oben ab.

### AUFGABE UND LÖSUNG

Der Erfindung liegt die Aufgabe zugrunde, eine eingangs genannte Verdampfereinrichtung sowie einen damit versehenen Dampfgarer bzw. ein Gargerät zu schaffen, mit denen Probleme des Standes der Technik gelöst werden können und es insbesondere möglich ist, eine praxistaugliche und effiziente Verdampfereinrichtung gut in einen entsprechenden Dampfgarer integrieren zu können.

Gelöst wird diese Aufgabe durch eine Verdampfereinrichtung mit den Merkmalen des Anspruchs 1 sowie einen Dampfgarer bzw. ein Gargerät mit den Merkmalen des Anspruchs 14. Vorteilhafte sowie bevorzugte Ausgestaltungen der Erfindung sind Gegenstand der weiteren Ansprüche und werden im Folgenden näher erläutert. Dabei werden manche der Merkmale nur für die Verdampfereinrichtung oder nur für den Dampfgarer bzw. das Gargerät beschrieben. Sie sollen jedoch unabhängig davon sowohl für die Verdampfereinrichtung als auch für den Dampfgarer bzw. das Gargerät selbständig und unabhängig voneinander gelten können. Der Wortlaut der Ansprüche wird durch ausdrückliche Bezugnahme zum Inhalt der Beschreibung gemacht.

Es ist vorgesehen, dass die Verdampfereinrichtung einen Wasserbehälter mit einer Außenwandung aufweist, die den Wasserbehälter bzw. einen Wasserbereich innerhalb davon begrenzt. An der Außenwandung, vorteilhaft an deren Außenseite, ist eine Heizeinrichtung vorgesehen, die vorteilhaft flächig ausgebildet ist. In dem Wasserbehälter wiederum ist eine Innenwandung vorgesehen, die innerhalb der Außenwandung verläuft und vorteilhaft überall einen Abstand davon aufweist. Beide sind umlaufend ausgebildet, vorteilhaft nach Art von Ringen ineinander. Ein zwischen Außenwandung und Innenwandung verlaufender bzw. gebildeter Wasserbereich enthält das zu verdampfende Wasser und ist vorteilhaft umlaufend, besonders vorteilhaft mit der Form, die durch Innenwandung und Außenwandung vorgegeben ist. Dies kann ein Kreisring sein.

Innerhalb der Innenwandung ist ein Innenbereich gebildet und darin ist eine Pumpe angeordnet, die dazu dient, Wasser von einem Wasservorrat, der außerhalb der Verdampfereinrichtung angeordnet sein kann, in den Wasserbereich zu pumpen. Dazu verläuft eine entsprechende Wasserleitung vom Wasservorrat zu der Pumpe. Des Weiteren geht vom Wasserbereich nach oben ein Dampfaustritt ab, durch den erzeugter Wasserdampf, der insbesondere oberhalb des Wasserbereichs entsteht und aufsteigt, aufgefangen, gesammelt und in das Innere des Dampfgarers bzw. des Gargeräts geleitet wird.

Durch die Integration der Pumpe in einen Innenbereich innerhalb der Innenwandung wird der vorher für sie außerhalb des Wasserbehälters benötigte Bauraum frei für andere Funktionseinheiten oder für eine etwas größere Ausgestaltung des Wasserbereichs bzw. des Verdampfers, so dass insgesamt ein größerer und leistungsfähigerer Verdampfer geschaffen werden kann mit einer höheren Verdampferleistung. Eine solche Pumpe zum Nachfüllen des Wasserbereichs bzw. um Wasser zu dem Verdampfungsvorgang zuzuführen braucht üblicherweise nicht besonders leistungsfähig und somit nicht sehr groß zu sein. So kann sie auch in eine relativ kleine Verdampfereinrichtung bzw. in einen kleinen Innenbereich innerhalb einer Innenwandung eines umlaufenden bzw. ringförmigen Wasserbehälters eingebaut werden. Des Weiteren kann dann ein Wasserweg von dem vorgenannten Wasservorrat zu dem Wasserbereich, also dem Ort des Verdampfens, relativ kurz gehalten werden. Der Innenbereich ist dabei vorteilhaft ein Raum, der von dem Wasserbehälter umschlossen wird, zumindest zur Seite hin. Besonders vorteilhaft ist der Innenbereich, in dem die Pumpe angeordnet ist, frei von Wasser bzw. trocken. Dies sollte für jeden Betriebszustand gelten.

Die Art der Pumpe ist nachrangig. Es kann eine Impellerpumpe sein, alternativ auch eine Axialpumpe oder eine Magnetresonanzpumpe, wie sie insbesondere in Kaffee- und Espressomaschinen benutzt wird.

In Ausgestaltung der Erfindung kann eine Wasserzuleitung von außen direkt an die Pumpe vorgesehen sein, wobei hierfür vorteilhaft eine Wasserleitung als Rohr oder auch als flexibler Wasserschlauch verwendet werden kann. Eine weitere Wasserleitung kann von der Pumpe in den Wasserbereich führen, insbesondere von oben in den Wasserbereich bzw. oberhalb der halben Höhe des Wasserbereichs. Unter Umständen ist es auch möglich, die Pumpe mit einem Ausgang direkt an den Wasserbereich oder eine Wandung des Wasserbereichs bzw. an die Innenwandung anzuschließen und zu befestigen. Dann wird keine weitere Wasserleitung zwischen Pumpe und Wasserbereich bzw. Innenwandung benötigt. Dies kann helfen, Dichtheitsprobleme zu verringern. Des Weiteren kann eine noch platzsparendere Anordnung der Pumpe in dem Innenbereich bzw. innerhalb der Innenwandung erreicht werden.

In weiterer Ausgestaltung der Erfindung kann vorgesehen sein, dass ein geschlossener Frischwasserbereich vorgesehen ist, der innerhalb des Wasserbereichs zumindest teilweise umlaufend, bevorzugt vollständig umlaufend, vorgesehen ist. Dieser bevorzugt ringförmige Frischwasserbereich liegt innerhalb des Wasserbereichs und somit innerhalb der Innenwandung. Durch diesen Frischwasserbereich, in dessen Innenbereich die Pumpe erfindungsgemäß angeordnet ist, wird sie gegen abgestrahlte Hitze vom Wasserbereich, in dem das Wasser bei Betrieb der Verdampfereinrichtung kocht, abgeschirmt bzw. thermisch gedämmt. So können Temperaturprobleme für die Pumpe reduziert oder verhindert werden. Darüber hinaus kann der Frischwasserbereich thermisch gut an die Innenwandung des Wasserbereichs angekoppelt werden bzw. nur durch die Innenwandung von dem beheizbaren Wasserbereich getrennt sein. Dadurch kann erreicht werden, dass der Wasserbereich sozusagen den Frischwasserbereich vorheizt bzw. mitheizt. So kann das Wasser im Frischwasserbereich schon etwas auf Temperatur gebracht werden, so dass der Heizaufwand und vor allem eine Heizdauer dann innerhalb des Wasserbereichs zum Verdampfen nicht mehr so groß sind.

Alternativ kann der Frischwasserbereich thermisch gedämmt sein gegen die Innenwandung des Wasserbereichs, um keine Heizenergie davon abzuführen.

In den Frischwasserbereich kann von außen mittels einer Wasserleitung oder Wasserzuleitung Frischwasser zugeführt werden, insbesondere von dem vorgenannten Wasservorrat des Dampfgarers. Mittels einer Wasserleitung kann der Frischwasserbereich mit der Pumpe im Innenbereich verbunden sein. Alternativ kann die Pumpe, ähnlich wie zuvor beschrieben worden ist, direkt an eine Öffnung in der Innenwandung des Frischwasserbereichs angeschlossen sein, so dass keine zwischenliegenden Wasserleitungen, Schläuche odgl. benötigt werden. Dann kann eine Zuführung von Wasser mittels der Pumpe in den Wasserbereich mit einer Wasserleitung bzw. einem Schlauch erfolgen. Dieser kann zwar auch von der innenliegenden Pumpe durch den Frischwasserbereich hindurch in den Wasserbereich gehen, beispielsweise in einem unteren Bereich oder ganz unten entlang eines Bodens der Verdampfereinrichtung. Alternativ können eine separate Wasserleitung bzw. ein Schlauch von der Pumpe von oben in den Wasserbereich ragen.

In einer nochmals weiteren Alternative kann, insbesondere wenn Teile der Verdampfereinrichtung, vorzugsweise der Innenwandung des Wasserbereichs und der Innenwandung des Frischwasserbereichs, aus Kunststoff bestehen, vorgesehen sein, dass an einer Innenwandung des Frischwasserbereichs zwei Öffnungen vorgesehen sind. Die eine Öffnung geht direkt in den Frischwasserbereich. An die andere Öffnung kann sich eine Art angespritzter oder angeformter Kanal anschließen, der sozusagen durch den Frischwasserbereich hindurchläuft und durch eine weitere Öffnung in der Innenwandung des Wasserbereichs in diesen hineinmündet. An diese beiden Öffnungen an der Innenwandung des Frischwasserbereichs kann dann eine entsprechend ausgebildete Pumpe mit zwei Wasseranschlüssen als Baueinheit angeschlossen werden. Diese saugt Wasser durch die einfache Öffnung aus dem Frischwasserbereich an und pumpt es durch den Kanal, der den Frischwasserbereich überquert, in den Wasserbereich. Dann muss lediglich eine Wasserleitung von dem vorgenannten Wasservorrat bis in den Frischwasserbereich vorgesehen sein.

In nochmals weiterer Ausgestaltung der Erfindung kann die Verdampfereinrichtung mit dem vorgenannten Wasserbereich, dem Frischwasserbereich und den Öffnungen darin sowie eventuell auch mit einer Wasserdurchführung als einteiliges Kunststoffteil ausgebildet sein, insbesondere als Spritzgussteil. So werden Dichtheitsprobleme reduziert oder vermieden und es werden weniger oder keine separaten aufwändigen Dichtungen benötigt.

In weiterer Ausgestaltung der Erfindung ist es möglich, dass in dem Wasserbereich eine Trennwand angeordnet ist, die den Wasserbereich in einen äußeren Bereich und einen inneren Bereich teilt. Eine solche Trennwand verläuft vorteilhaft vertikal bzw. parallel zu Außenwandung und/oder Innenwandung. Die Trennwand kann in etwa mittig zwischen Außenwandung und Innenwandung verlaufen, so dass sie zu beiden einen ähnlichen oder den gleichen Abstand aufweist. Bevorzugt sind Durchlasskanäle, beispielsweise in einfacher Form als Durchlassöffnungen, in der Trennwand vorgesehen, die einen äußeren Bereich mit einem inneren Bereich verbinden, so dass ein Wasserfluss möglich ist. So kann erreicht werden, dass der äußere Bereich relativ schmal ist, beispielsweise 1 cm breit bzw. zwischen 5 % und 20 % der Höhe des äußeren Bereichs bzw. Wasserbereichs. Bei einer Beheizung der Außenwandung kann so die Heizleistung im Verhältnis zum direkt zu beheizenden Wasservolumen relativ groß sein, so dass eine Dampferzeugung relativ schnell einsetzt. Gleichzeitig kann durch das automatische Nachfließen von Wasser aus dem inneren Wasserbereich durch die genannte Trennwand hindurch erreicht werden, dass das Wasser nicht zu schnell wegverdampft ist, was dann wiederum nicht nur ein Verringern der Dampfproduktion oder sogar ein Aussetzen der Dampffunktion bedeuten würden, sondern auch eine Beschädigung der Heizeinrichtung durch Übertemperatur bewirken könnte. Durch das selbsttätige Nachfließen des Wassers brauchen hierfür auch keinerlei Pumpmittel odgl. eingesetzt zu werden. Die genannten Durchlasskanäle sind vorteilhaft in einem unteren Bereich vorgesehen, besonders vorteilhaft ganz unten an einem Boden der Verdampfereinrichtung. Dadurch stört das nachfließende Wasser den Verdampfungsprozess nicht. Des Weiteren kann so maximal lange Wasser aus dem inneren Bereich in den äußeren Bereich durch die Durchlasskanäle nachfließen.

Als Heizeinrichtung an der Außenwandung bietet sich eine Dickschichtheizung an. Diese kann in parallelen Bahnen, als große durchgängige Fläche oder als Bahnen in sonstigen Windungen oder Schleifen aufgebracht werden und so eine weitgehend großflächige und gleichmäßige Beheizung bewirken. Eine solche Heizeinrichtung kann sich über die wesentliche Höhe in vertikaler Richtung der Verdampfereinrichtung erstrecken. Unter Umständen kann sie in mehrere unterschiedliche bzw. unabhängige Heizkreise unterteilt sein, die unabhängig voneinander betrieben werden können. Diese unterschiedlichen Heizkreise können in vertikaler Richtung aufgeteilt sein, beispielsweise als unterer Heizkreis und oberer Heizkreis, unter Umständen auch noch mit einem zusätzlichen mittleren Heizkreis. Temperatursensoren bzw. eine Temperatur-überwachung können vorgesehen sein, sowohl punktförmig als auch großflächig, wie dies an sich aus dem Stand der Technik bekannt ist.

Ein Dampfaustritt über dem Wasserbereich kann entweder so ausgebildet sein, dass er die gesamte Verdampfereinrichtung überspannt bzw. überdeckt und den gesammelten Dampf abführt. Alternativ kann über einem ringförmigen oberen Bereich des Wasserbereichs eine Dampfführung zum Dampfaustritt vorgesehen sein, die beispielsweise den Bereich über dem Innenbereich frei lässt.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### KURZBESCHREIBUNG DER ZEICHNUNGEN

Ausführungsbeispiele der Erfindung sind in den Zeichnungen schematisch dargestellt und werden im Folgenden näher erläutert. In den Zeichnungen zeigen:
- Fig. 1: eine schematische Seitenansicht eines erfindungsgemäßen Dampfgarers mit einer erfindungsgemäßen Verdampfereinrichtung,
- Fig. 2: eine vergrößerte Seitenansicht einer erfindungsgemäßen Verdampfereinrichtung,
- Fig. 3: eine Seitenansicht einer alternativen erfindungsgemäßen Verdampfereinrichtung und
- Fig. 4: eine geschnittene Draufsicht auf die Verdampfereinrichtung aus Fig. 3.

### DETAILLIERTE BESCHREIBUNG DER AUSFÜHRUNGSBEISPIELE

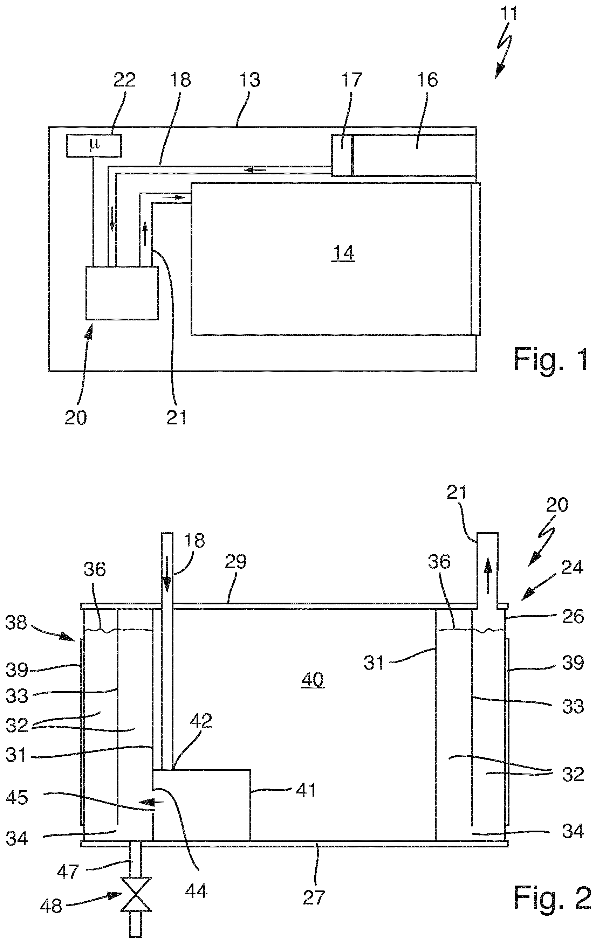

In der Fig. 1 ist ein erfindungsgemäßer Dampfgarer 11 dargestellt mit einem Gehäuse 13 und einer Muffel 14, in der Nahrungsmittel mit Dampf zubereitet werden können. Der Dampfgarer 11 weist einen Wasservorrat 16 auf, beispielsweise als entnehmbarer Behälter. Er kann mittels eines Kupplungsanschlusses 17 mit einer Wasserzuleitung 18 zu einer Verdampfereinrichtung 20 verbunden werden. Von der Verdampfereinrichtung 20 führt eine Dampfleitung 21 in die Muffel 14. Über die Wasserzuleitung 18 kann aus dem Wasservorrat 16 also Frischwasser in die Verdampfereinrichtung 20 eingebracht werden. Dampf verlässt die Verdampfereinrichtung 20 über die Dampfleitung 21, um dann in die Muffel 14 eingebracht zu werden auf bekannte Art und Weise.

Des Weiteren weist der Dampfgarer 11 noch eine Steuerung 22 auf, die mindestens mit der Verdampfereinrichtung 20 verbunden ist. Vorteilhaft kann die Steuerung 22 auch andere oder sämtliche Funktionen des Dampfgarers 11 steuern.

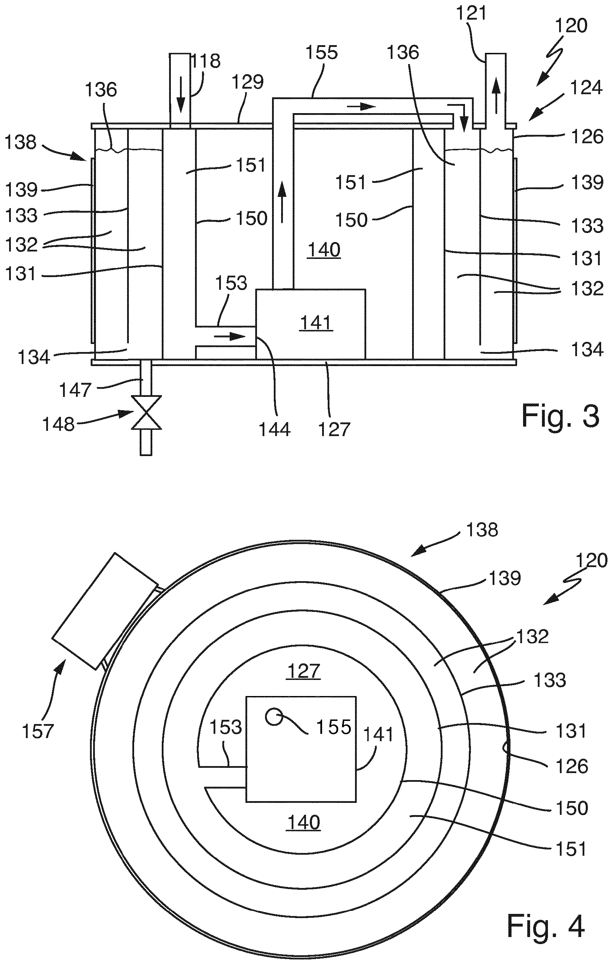

In der Fig. 2 ist in vergrößerter Seitenansicht eine erfindungsgemäße Verdampfereinrichtung 20 entsprechend Fig. 1 dargestellt. Sie weist einen Wasserbehälter 24 auf, der rohrförmig bzw. als kurzes stehendes Rohr mit rundem Querschnitt ausgebildet ist, siehe hierzu auch die Fig. 4 sowie die zugehörigen Erläuterungen. Der Wasserbehälter 24 weist eine umlaufende Außenwandung 26 auf, die geschlossen ist und in Ringform zwischen einem entsprechenden runden Boden 27 und einem runden Deckel 29 verläuft. Sie kann mit diesen dauerhaft verbunden sein, unter Umständen auch mit mindestens einem von beiden einstückig hergestellt sein. Eine ebenfalls ringförmige Innenwandung 31 trennt einen innenliegenden Innenbereich 40 ab. Zwischen Innenwandung 31 und Außenwandung 26 ist der eingangs genannte Wasserbereich 32 gebildet, der mit Wasser 36 gefüllt ist. Innerhalb dieses Wasserbereichs 32 verläuft eine Trennwand 33, vorteilhaft parallel zur Außenwandung 26 und/oder Innenwandung 31. Besonders vorteilhaft verläuft die Trennwand 33 mittig zwischen diesen beiden Wandungen. Im unteren Bereich kann sie mehrere Durchlassöffnungen 34 aufweisen, vorteilhaft in Form einfacher Löcher oder Öffnungen. So kann sozusagen Wasser vom durch die Trennwand 33 abgetrennten inneren Bereich des Wasserbereichs 32 in den äußeren Bereich nachfließen.

An der Außenseite der Außenwandung 26 ist eine Heizeinrichtung 38 vorgesehen, vorteilhaft eine flächige Heizeinrichtung mit flächigen bzw. eine Fläche überdeckenden Heizelementen 39, die hier nur schematisch dargestellt sind. Hierzu wird auf die DE 102007029244 A1 verwiesen, die derartige Heizeinrichtungen bzw. Heizelemente beschreibt, vorteilhaft als Dickschichtheizelemente. Die Heizeinrichtung 38 kann auch in mehrere Heizkreise unterteilt sein, insbesondere in vertikaler Richtung, die jeweils mindestens ein Heizelement aufweisen und unabhängig voneinander, aber auch gemeinsam, betreibbar sind. Weitere Ausführungen hierzu werden nicht gemacht. Die Heizeinrichtung 38 bzw. das mindestens eine Heizelement 39 endet knapp oberhalb des Bodens 27 und knapp unterhalb des Deckels 29.

In dem freien und trockenen Innenbereich 40 innerhalb der Innenwandung 31 ist eine Pumpe 41 angeordnet. Die vorgenannte Wasserzuleitung 18 führt an einen Pumpeneinlass 42 oben an der Pumpe 41. Ein Pumpenauslass 44 geht an den Wasserbereich 32, und zwar hier direkt an eine Öffnung 45 in der Innenwandung 31. Ein solcher direkter Anschluss am Pumpeneinlass wie auch am Pumpenauslass, der eingangs auch beschrieben worden ist, weist den Vorteil auf, dass keine zusätzlichen Leitungen, Rohre, Schläuche odgl. benötigt werden. Gleichzeitig muss natürlich die Pumpe 41 mit ihrem Pumpengehäuse im Bereich des Pumpenauslasses 44 genau an die Form der Innenwandung 31 angepasst werden. Alternativ kann der Pumpenauslass 44 auch einen angeformten, abstehenden Stutzen odgl. aufweisen. Dieser kann an die Öffnung 45 in der Innenwandung 31 angeschlossen werden, beispielsweise eingesteckt werden. Dabei können noch Dichtungsmittel vorgesehen sein.

Bei der Verdampfereinrichtung 20 der Fig. 2 wird der Innenbereich 40 innerhalb des Wasserbereichs 32 bzw. im Wasserbehälter 24 genutzt, um dort die Pumpe 41 anzubringen. Diese kann, beispielsweise von der Steuerung 22 gesteuert, Frischwasser von der Wasserzuleitung 18 in den Wasserbereich 32 pumpen, und zwar je nach Bedarf an Frischwasser. Dies ist also abhängig von der Menge an Wasser 36, das bereits verdampft wurde mittels der Heizeinrichtung 38 und über die Dampfleitung 21 bzw. einen entsprechenden Dampfaustritt oberhalb des äußeren Bereichs des Wasserbereichs 32 abgeführt worden ist.

Dieser Dampfaustritt bzw. der Übergang des äußeren Bereichs des Wasserbereichs 32 in die Dampfleitung 21 ist hier nicht näher dargestellt. Er kann jedoch so ausgebildet sein, wie es in der europäischen Patentanmeldung EP 16162893.8 mit Anmeldetag vom 30. März 2016 derselben Anmelderin beschrieben worden ist. Auf diese wird diesbezüglich ausdrücklich verwiesen.

Durch die im Innenbereich 40 angeordnete Pumpe 41 kann der ansonsten dafür notwendige Bauraum innerhalb des Gehäuses 13 des Dampfgarers 11 entsprechend Fig. 1 eingespart werden. Des Weiteren können, wie gerade der Anschluss der Pumpe 41 direkt an die Innenwandung 31 zeigen soll, eventuell Schnittstellen zwischen Leitungen reduziert werden, was eine einfachere Montage und eine dichtere Ausgestaltung des Dampfgarers 11 bewirkt.

Die Auftrennung des Wasserbereichs 32 in einen inneren Bereich und einen äußeren Bereich mittels der Trennwand 33 dient dazu, dass die Heizeinrichtung 38 mit nur dem äußeren Bereich, also zwischen Außenwandung 26 und Trennwand 33, nur ein geringeres Wasservolumen beheizen muss zur Dampferzeugung. Durch den inneren Bereich mit den Durchlassöffnungen 34 in der Trennwand 33 kann aber automatisch und selbsttätig Wasser nachfließen, selbst ohne sofortigen Betrieb der Pumpe 41, so dass ein Leerkochen nicht so schnell erfolgen kann bzw. das Risiko eines Leerkochens reduziert ist samt möglicher Beschädigung der Heizeinrichtung 38 oder sogar der gesamten Verdampfereinrichtung 20.

Unten an dem Wasserbehälter 24 bzw. dessen Boden 27 ist noch ein Ablassstutzen 47 vorgesehen. Er weist ein Ablassventil 48 auf. Damit kann Restwasser aus der Verdampfereinrichtung 20 bzw. dem Wasserbehälter 24 ausgelassen werden, um Hygieneprobleme durch lange stehendes Wasser bei Nichtbenutzung des Dampfgarers 11 zu vermeiden. Dies ist aber grundsätzlich bekannt.

In Fig. 3 ist eine alternative erfindungsgemäße Verdampfereinrichtung 120 dargestellt, die ähnlich ausgebildet ist wie diejenige aus Fig. 2. Sie weist einen Wasserbehälter 124 mit ringförmig umlaufender Außenwandung 126, Boden 127 und Deckel 129 auf. Eine ringförmig umlaufende Innenwandung 131, die parallel zur Außenwandung 126 verläuft, definiert mit dieser zwischen sich einen Wasserbereich 132. Der Wasserbereich 132 ist durch eine Trennwand 133 in einen inneren Bereich und einen äußeren Bereich unterteilt. Wie hier die Draufsicht bzw. Schnittansicht der Verdampfereinrichtung 120 von oben aus Fig. 4 zeigt, sind Außenwandung 126, Innenwandung 131 und Trennwand 133 parallel und konzentrisch zueinander in Ringform ausgebildet. Die Trennwand 133 weist im unteren Bereich mehrere Durchlassöffnungen 134 auf. Außen an der Außenwandung 126 ist eine Heizeinrichtung 138 mit mindestens einem Heizelement 139 vorgesehen, wie dies vorstehend bereits beschrieben worden ist. Ein elektrischer Anschluss daran kann über den in Fig. 4 dargestellten Anschluss 157 erfolgen, der vorteilhaft als Steckanschluss ausgebildet ist.

Zusätzlich zu der Verdampfereinrichtung 20 aus Fig. 2 ist innerhalb der Innenwandung 131 noch eine Wandung 150 vorgesehen, die gemäß Fig. 4 ebenfalls konzentrisch und in Ringform bzw. Rohrform ausgebildet ist. Sie verläuft im Wesentlichen geschlossen zwischen Boden 127 und Deckel 129, bis auf eine Öffnung für einen Rohrstutzen 153 daraus heraus. Zwischen Innenwandung 131 und Wandung 150 ist ein Frischwasserbereich 151 gebildet. In diesen führt von oben die Wasserzuleitung 118 vom Wasservorrat des Dampfgarers hinein. Die Pumpe 141 im Innenbereich 140 der Verdampfereinrichtung 120 entnimmt nach Bedarf Wasser aus dem Frischwasserbereich 151 über den Rohrstutzen 153. Über eine Rohrleitung 155 pumpt sie dieses Frischwasser bei Bedarf von oben in den inneren Bereich des Wasserbereichs 132.

Der Vorteil eines solchen Frischwasserbereichs 151 liegt weniger darin, dass die Pumpe 141 aus einem näher gelegenen Vorrat das Frischwasser zum Verdampfen ziehen kann, sondern dass durch den aus Fig. 4 in der Draufsicht erkennbaren Ring von Frischwasser 151 um sie herum eine gute thermische Dämmung gegen die Heizeinrichtung 138 an der Außenseite der Verdampfereinrichtung 120 sowie gegen die Wärme gegeben sein kann, die ja über das heiße Wasser auch im inneren Bereich des Wasserbereichs 132 und somit auch an der Innenwandung 131 anliegt. Zu diesem Zweck kann, wie übrigens auch bei der Verdampfereinrichtung 20 gemäß der Fig. 2, um die Pumpe herum eine thermische Dämmung vorgesehen sein. Diese kann entweder nur an der Pumpe selbst vorgesehen sein oder aber an der der Pumpe nächstgelegenen Wandung. Bei der Fig. 2 ist dies die Innenwandung 31, die beispielsweise an der Innenseite thermisch gedämmt sein kann durch eine größere Wanddicke oder entsprechende thermische Dämmmaterialien. Bei der Verdampfereinrichtung 120 der Fig. 3 wäre dies vorteilhaft an der Wandung 150. So wird weniger Dämmmaterial benötigt. Des Weiteren kann der Frischwasserbereich 151 auch bereits etwas vorgeheizt werden. Alternativ kann eine solche Dämmung auch wiederum an der Innenwandung 131 vorgesehen sein, dann unter dem Aspekt, dass nicht so viel Wärme in den Frischwasserbereich 151 abgegeben werden muss, was die Wärmeleistung im äußeren Bereich des Wasserbereichs 132 zum Verdampfen des dort enthaltenen Wassers 136 vergrößert.

Auch bei der Verdampfereinrichtung 120 entsprechend Fig. 2 ist ein vorbeschriebener Ablassstutzen 147 samt Ablassventil 148 vorgesehen. Der Ablassstutzen samt Ablassventil kann ganz allgemein auch zum Ablassen dieses genannten Restwassers dienen. Alternativ kann er für einen Reinigungs- und Entkalkungsvorgang dienen, um eine entsprechende Flüssigkeit nach dem Vorgang wieder möglichst vollständig entfernen zu können und auch um nachspülen zu können. Da ein solcher Vorgang nur selten durchgeführt werden muss, kann das Ablassventil auch manuell betätigbar sein, selbst wenn dies für eine Bedienperson einen erhöhten Aufwand bedeutet.

Die Pumpe 41 kann eine Impellerpumpe sein. Alternativ können auch beliebige sonstige Pumpen vorgesehen sein, beispielsweise Magnetresonanzpumpen, wie sie aus Kaffeevollautomaten oder Siebträgermaschinen für die Kaffeezubereitung bekannt sind. Die Heizeinrichtung kann vorteilhaft als Dickschichtheizeinrichtung ausgebildet sein, wie dies aus der vorgenannten DE 102007029244 A1 bekannt ist.

Die Größe bzw. das Volumen des äußeren Bereichs und des inneren Bereichs des Wasserbereichs sowie ggf. des Frischwasserbereichs 151 der Verdampfereinrichtung 120 gemäß Fig. 3 kann so klein ausgelegt werden, dass nach Beendigung des Dampfbetriebs, wenn also kein Dampf mehr benötigt wird, kein Restwasser in den Wasservorrat zurückgepumpt werden muss. Es sollte nur noch eine geringe verbleibende Restwassermenge vorhanden sein, vor allem im Wasserbereich. Diese kann dann direkt verdampft werden zum Entfernen des Wassers, selbst wenn der Dampfgarer bzw. der Garvorgang eigentlich keinen Dampf mehr benötigt. So kann eine hierfür notwendige Pumpe vermieden werden, und insgesamt muss lediglich eine einzige Pumpe vorgesehen sein, die Frischwasser in die Verdampfereinrichtung dosiert bzw. zuführt.

## Patentansprüche

1. Verdampfereinrichtung (20, 120) für Wasser (36,136) mit den folgenden Merkmalen:
- einen Wasserbehälter (24, 124) mit einer umlaufenden Außenwandung (26, 126) und mit einer umlaufenden Innenwandung (31, 131),
- an der Außenwandung (26, 126) ist eine Heizeinrichtung (38, 138) vorgesehen,
- die Innenwandung (31, 131) verläuft innerhalb der Außenwandung (26, 126) und mit Abstand dazu,
- zwischen Außenwandung (26, 126) und Innenwandung (31, 131) ist ein Wasserbereich (32, 132) gebildet,
- einen Dampfaustritt (21, 121), der vom Wasserbereich (32, 132) nach oben abgeht, **dadurch gekennzeichnet, dass** innerhalb der Innenwandung (31,131) eine Pumpe (41,141) angeordnet ist, um Wasser von einem Wasservorrat (16) in den Wasserbereich (32,132) zu pumpen.

2. Verdampfereinrichtung nach Anspruch 1, **dadurch gekennzeichnet, dass** innerhalb der Innenwandung (31, 131) ein Innenbereich (40, 140) gebildet ist zur Anordnung der Pumpe (41, 141) darin, wobei vorzugsweise der Innenbereich trocken bzw. frei von Wasser ist.

3. Verdampfereinrichtung nach Anspruch 1 oder 2, **dadurch gekennzeichnet, dass** eine Wasserzuleitung (18) von außen direkt an die Pumpe (41) vorgesehen ist, vorzugsweise von dem Wasservorrat (16) kommend, wobei eine weitere Wasserleitung von der Pumpe in den Wasserbereich führt, insbesondere von oben in den Wasserbereich.

4. Verdampfereinrichtung nach Anspruch 2 und 3, **dadurch gekennzeichnet, dass** die Innenwandung (31) den Innenbereich (40) nach außen bzw. in radialer Richtung nach außen begrenzt.

5. Verdampfereinrichtung nach Anspruch 1 oder 2, **dadurch gekennzeichnet, dass** innerhalb des Wasserbereichs (132) ein zumindest teilweise umlaufender Frischwasserbereich (151) vorgesehen ist, der mittels einer Wasserleitung (153) mit der Pumpe (141) verbunden ist.

6. Verdampfereinrichtung nach Anspruch 5, **dadurch gekennzeichnet, dass** der Frischwasserbereich (151) vollständig umläuft, wobei vorzugsweise in den Frischwasserbereich (151) von außen mittels einer Wasserleitung (118) Frischwasser zuführbar ist.

7. Verdampfereinrichtung nach Anspruch 5 oder 6, **dadurch gekennzeichnet, dass** die Wasserleitung (153) von dem Frischwasserbereich (151) zu der Pumpe (141) in einem unteren Bereich des Frischwasserbereichs abgeht, vorzugsweise in einem untersten Bereich.

8. Verdampfereinrichtung nach einem der Ansprüche 5 bis 7, **dadurch gekennzeichnet, dass** die Wasserleitung (118) vom Wasservorrat (16) in einen oberen Bereich des Frischwasserbereichs (151) führt.

9. Verdampfereinrichtung nach einem der Ansprüche 5 bis 8, **dadurch gekennzeichnet, dass** der ringförmige Frischwasserbereich (151) direkt an der radial inneren Seite des Wasserbereichs (132) anliegt bzw. verläuft und ebenso umläuft in Ringform, vorzugsweise mit einer einzigen gemeinsamen Trennwandung (131) zwischen Wasserbereich (132) und Frischwasserbereich (151), die von der Innenwandung (131) gebildet ist.

10. Verdampfereinrichtung nach einem der vorhergehenden Ansprüche, **dadurch gekennzeichnet, dass** in dem Wasserbereich (32, 132) eine umlaufende Trennwand (33, 133) angeordnet ist, vorzugsweise in radialer Richtung mittig in dem Wasserbereich (32, 132) und/oder mit gleichbleibendem Abstand zu der Außenwandung (26, 126), wobei die Trennwand (33, 133) einen radial inneren Bereich und einen radial äußeren Bereich im Wasserbereich (32, 132) ausbildet.

11. Verdampfereinrichtung nach Anspruch 10, **dadurch gekennzeichnet, dass** mindestens ein Durchlasskanal (34, 134) durch die Trennwand (33, 133) zwischen einem radial inneren Bereich und einem radial äußeren Bereich vorgesehen ist, wobei insbesondere der mindestens eine Durchlasskanal (34, 134) im unteren Bereich der Trennwand (33, 133) vorgesehen ist.

12. Verdampfereinrichtung nach Anspruch 10 oder 11, **dadurch gekennzeichnet, dass** die Trennwand (33, 133) einen radial inneren Bereich des Wasserbereichs (32, 132) vom Dampfaustritt (21, 121) trennt.

13. Verdampfereinrichtung nach einem der vorhergehenden Ansprüche, **dadurch gekennzeichnet, dass** der Dampfaustritt (21, 121) umlaufend über dem Wasserbereich (32, 132) ausgebildet ist, insbesondere über einem radial äußeren Bereich des Wasserbereichs, wobei vorzugsweise eine Dampfleitung vorgesehen ist, die vom Dampfaustritt (21, 121) abgeht.

14. Dampfgarer (11) mit einer Verdampfereinrichtung (20, 120) nach einem der vorhergehenden Ansprüche, wobei der Dampfgarer (11) aufweist:
- einen Wasservorrat (16) mit einer Wasserleitung (18) zu der Verdampfereinrichtung (20, 120),
- eine Muffel (14) zur Zubereitung von Nahrungsmitteln mittels Dampf,
- eine Dampfleitung (21, 121) von der Verdampfereinrichtung (20, 120) zu der Muffel (14).

## Claims

1. Evaporator device (20, 120) for water (36, 136) having the following features:
- a water tank (24, 124) having an encircling outer wall (26, 126) and an encircling inner wall (31, 131),
- a heating device (38, 138) is provided on the outer wall (26, 126),
- the inner wall (31, 131) extends within the outer wall (26, 126) and with a clearance relative thereto,
- a water zone (32, 132) is formed between the outer wall (26, 126) and the inner wall (31, 131),
- a steam outlet (21, 121) which emerges upwards from the water zone (32, 132), **characterized in that** within the inner wall (31, 131) a pump (41, 141) is arranged, in order to pump water from a water reservoir (16) into the water zone (32, 132).

2. Evaporator device according to claim 1, **characterized in that** within the inner wall (31, 131) an inner zone (40, 140) is formed for arrangement of the pump (41, 141) therein, wherein preferably the inner zone is dry or free from water.

3. Evaporator device according to claim 1 or 2, **characterized in that** a water feed line (18) from the outside directly to the pump (41) is provided, preferably coming from the water reservoir (16), wherein a further water line leads from the pump into the water zone, in particular from above into the water zone.

4. Evaporator device according to claim 2 and 3, **characterized in that** the inner wall (31) delimits the inner zone (40) with respect to the outside or in a radial direction with respect to the outside.

5. Evaporator device according to claim 1 or 2, **characterized in that** an at least partially encircling freshwater zone (151) is provided within the water zone (132), said freshwater zone being connected to the pump (141) by means of a water line (153).

6. Evaporator device according to claim 5, **characterized in that** the freshwater zone (151) extends all the way round, wherein preferably freshwater can be fed into the freshwater zone (151) from outside by means of a water line (118).

7. Evaporator device according to claim 5 or 6, **characterized in that** the water line (153) leads from the freshwater zone (151) to the pump (141) in a lower zone of said freshwater zone, preferably in a lowermost zone.

8. Evaporator device according to any of the claims 5 to 7, **characterized in that** the water line (118) leads from the water reservoir (16) into an upper zone of said freshwater zone (151).

9. Evaporator device according to any of the claims 5 to 8, **characterized in that** the annular freshwater zone (151) directly adjoins or extends directly along and likewise extends in a form of a ring around the radially inner side of the water zone (132), preferably has a single common dividing wall (131) between water zone (132) and freshwater zone (151), which wall is formed by the inner wall (131).

10. Evaporator device according to any of the preceding claims, **characterized in that** an encircling dividing wall (33, 133) is arranged in the water zone (32, 132), preferably centrally in the water zone (32, 132) in a radial direction and/or at a constant distance from the outer wall (26, 12), wherein the dividing wall (33, 133) forms a radially inner zone and a radially outer zone in the water zone (32, 132).

11. Evaporator device according to claim 10, **characterized in that** at least one through passage (34, 134) is provided through the dividing wall (33, 133) between a radially inner zone and a radially outer zone, wherein in particular the at least one through passage (34, 134) is provided in a lower zone of the dividing wall (33, 133).

12. Evaporator device according to claim 10 or 11, **characterized in that** the dividing wall (33, 133) separates a radially inner zone of the water zone (32, 132) from the steam outlet (21, 121).

13. Evaporator device according to any of the preceding claims, **characterized in that** the steam outlet (21, 121) is formed in an encircling manner above the water zone (32, 132), in particular above a radially outer zone of the water zone, wherein preferably a steam line is provided, emerging from the steam outlet (21, 121).

14. Steamer (11) having an evaporator device (20, 120) according to any of the preceding claims, wherein the steamer (11) includes:
- a water reservoir (16) having a water line (18) to the evaporator device (20, 120),
- a muffle (14) for preparation of food by means of steam,
- a steam line (21, 121) from the evaporator device (20, 120) to the muffle (14).

## Revendications

1. Dispositif évaporateur (20, 120) pour de l'eau (36, 136) comprenant les caractéristiques suivantes :
- un réservoir d'eau (24, 124) avec une paroi extérieure périphérique (26, 126) et avec une paroi intérieure périphérique (31, 131),
- sur la paroi extérieure (26, 126) est fourni un dispositif de chauffage (38, 138),
- la paroi intérieure (31, 131) s'étend au sein de la paroi extérieure (26, 126) et à distance de celle-ci,
- une zone d'eau (32, 132) est formée entre paroi extérieure (26, 126) et paroi intérieure (31, 131),
- une sortie de vapeur (21, 121) émergeant de la zone d'eau (32, 132) vers le haut, **caractérisé en ce qu'**au sein de la paroi intérieure (31, 131) une pompe (41, 141) est disposée afin de pomper de l'eau d'une réserve d'eau (16) vers la zone d'eau (32, 132).

2. Dispositif évaporateur selon la revendication 1, **caractérisé en ce qu'**au sein de la paroi intérieure (31, 131) une zone intérieure (40, 140) est formée pour arranger la pompe (41, 141) là-dedans, dans lequel de préférence la zone intérieure est sec ou exempt d'eau.

3. Dispositif évaporateur selon la revendication 1 ou 2, **caractérisé en ce qu'**une conduite d'alimentation d'eau (18) de l'extérieur directement à la pompe (41) est prévue, de préférence découlant de la réserve d'eau (16), dans lequel une autre conduite d'eau mène de la pompe à la zone d'eau, en particulier par le haut à la zone d'eau.

4. Dispositif évaporateur selon la revendication 2 et 3, **caractérisé en ce que** la paroi intérieure (31) délimite la zone intérieure (40) vers l'extérieur ou bien dans la direction radiale vers l'extérieur.

5. Dispositif évaporateur selon la revendication 1 ou 2, **caractérisé en ce qu'**au sein de la zone d'eau (132) une zone d'eau fraiche (151) au moins partiellement périphérique est prévue et raccordée à la pompe (141) par le biais d'une conduite d'eau (153).

6. Dispositif évaporateur selon la revendication 5, **caractérisé en ce que** la zone d'eau fraiche (151) est complètement périphérique, dans lequel de préférence de l'eau fraiche peut être alimentée de l'extérieur par le biais d'une conduite d'eau (118) à la zone d'eau fraiche (151).

7. Dispositif évaporateur selon la revendication 5 ou 6, **caractérisé en ce que** la conduite d'eau (153) de la zone d'eau fraiche (151) à la pompe (141) partit d'une zone inférieure de la zone d'eau fraiche, de préférence d'une zone la plus inférieure.

8. Dispositif évaporateur selon l'une quelconque des revendications 5 à 7, **caractérisé en ce que** la conduite d'eau (118) mène de la réserve d'eau (16) à une zone supérieure de la zone d'eau fraiche (151).

9. Dispositif évaporateur selon l'une quelconque des revendications 5 à 8, **caractérisé en ce que** la zone d'eau fraiche annulaire (151) jouxte directement ou bien s'étend directement le long et de même s'étend sous forme d'anneau au côté intérieur radial de la zone d'eau (132), de préférence avec une seule paroi de séparation (131) commune entre la zone d'eau (132) et la zone d'eau fraiche (151), la paroi de séparation étant formée par la paroi intérieure (131).

10. Dispositif évaporateur selon l'une quelconque des revendications précédentes, **caractérisé en ce que** dans la zone d'eau (32, 132) une paroi de séparation (33, 133) périphérique est arrangée, de préférence dans la direction radiale centrique dans la zone d'eau (32, 132) et/ou à distance constante de la paroi extérieure (26, 126), dans lequel la paroi de séparation (33, 133) forme une zone intérieure radiale et une zone extérieure radiale dans la zone d'eau (32, 132).

11. Dispositif évaporateur selon la revendication 10, **caractérisé en ce qu'**au moins un canal de passage (34, 134) à travers la paroi de séparation (33, 133) est prévu entre une zone intérieure radiale et une zone extérieure radiale, dans lequel en particulier l'au moins un canal de passage (34, 134) est prévu dans la zone inférieure de la paroi de séparation (33, 133).

12. Dispositif évaporateur selon la revendication 10 ou 11, **caractérisé en ce que** la paroi de séparation (33, 133) sépare une zone intérieure radiale de la zone d'eau (32, 132) de la sortie de vapeur (21, 121).

13. Dispositif évaporateur selon l'une quelconque des revendications précédentes, **caractérisé en ce que** la sortie de vapeur (21, 121) est périphérique au-dessus de la zone d'eau (32, 132), en particulier au-dessus d'une zone extérieure radiale de la zone d'eau, dans lequel de préférence une conduite de vapeur est prévue, sortant de la sortie de vapeur (21, 121).

14. Cuiseur à vapeur (11) comportant un dispositif évaporateur (20, 120) selon l'une quelconque des revendications précédentes, le cuiseur à vapeur comprenant :
- une réserve d'eau (16) avec une conduite d'eau (18) vers le dispositif évaporateur (20, 120),
- un moufle (14) pour la préparation de denrées alimentaires au moyen de vapeur,
- une conduite de vapeur (21, 121) du dispositif évaporateur (20, 120) au moufle (14).
